# EUROPÄISCHE PATENTSCHRIFT

(11) **EP 0 709 683 B1**
(45) Veröffentlichungstag und Bekanntmachung des Hinweises auf die Patenterteilung: **17.09.1997**
(21) Anmeldenummer: 95115926.8
(22) Anmeldetag: 10.10.1995
(51) Int. Cl.: G01P 1/14, G07C 5/08, G07C 7/00

(54) **Anordnung der Aufzeichnungsträger in einem Fahrtschreiber mit einem flachen Einbaugehäuse**
Arrangement of recording media in a tachograph with a flat housing
Arrangement des supports d'enregistrement dans un tachygraphe avec un boîtier plat

(30) Priorität: 31.10.1994 DE 4438926
(43) Veröffentlichungstag der Anmeldung: 01.05.1996
(73) Patentinhaber: VDO Adolf Schindling AG, 60326 Frankfurt/Main (DE)
(72) Erfinder: Höni, Helmut, Dipl.-Ing., D-78733 Aichhalden (DE)

(56) Entgegenhaltungen:
- EP-A- 0 255 934
- EP-A- 0 309 854
- DE-C- 3 505 068
- DE-U- 9 317 101

## Beschreibung

Die Erfindung betrifft eine Anordnung der Aufzeichnungsträger in einem Fahrtschreiber mit einem flachen Einbaugehäuse, in welchem vorzugsweise zwei Diagrammscheiben und zwei Datenkarten Anwendung finden.

Eine derartige Anordnung ist z.B. aus DE-U-9 317 101 bekannt.

Die gemeinsame Verwendung von Diagrammscheiben und fahrerbezogenen Datenkarten in ein und demselben Fahrtschreibersystem bietet die Möglichkeit die Vorteile beider Datenträger nutzen zu können. Das heißt, die Diagrammscheiben, die ohne technische Hilfsmittel verwenden zu müssen lesbar sind, liefern die übliche Sofortinformation über Fahrt und Arbeitszeitdaten innerhalb eines Zeitrahmens von 24 Stunden, während die mit Halbleiterspeichern versehenen Datenkarten der Langzeitspeicherung insbesondere der Arbeitszeitdaten dienen. Darüber hinaus bietet die gleichzeitige Verwendung von Diagrammscheiben und Datenkarten den Vorzug, daß am Ende eines Arbeitstages, einer Schicht oder eines Transportauftrages automatisch ein Fahrtprotokoll erstellt ist. Ferner läßt sich mit dieser Parallelaufzeichnung die Plausibilität der in den Datenkartenspeichern eingeschriebenen Daten überprüfen. Da für die Aufzeichnungen auf Diagrammscheiben und Datenkarten voneinander völlig verschiedene Registrierverfahren angewandt werden, ist eine derartige Plausibilitätsprüfung in besonderem Maße zuverlässig.

Auf der anderen Seite spielt bei Fahrtschreibern die Einbaufähigkeit im haptischen Bereich des Fahrers eine entscheidende Rolle. Um zusätzlich auch Forderungen nach einer allgemeinen Verwendbarkeit gerecht werden zu können, beispielsweise um Fahrtschreiber auch in gewerblich genutzte Personenkraftwaren bzw. in Fahrzeugen, die nicht der Einbaupflicht unterliegen, einbauen zu können, wobei wegen der in solchen Fahrzeugen bereits vorhandenen Instrumentierung ein ausschließlich registrierendes Gerät vorgesehen werden kann, ist für einen derartigen Fahrtschreiber ein Gehäuse mit möglichst niedriger Bauhöhe anzustreben.

Vor diesem Hintergrund bestand die Aufgabe der vorliegenden Erfindung darin, einen Fahrtschreiber für die Verwendung von Diagrammscheiben und Datenkarten zu schaffen, welcher mit geringem Aufwand hergestellt werden kann und bezüglich des Raumbedarfs für die Aufzeichnungsträger sowie deren Handhabbarkeit beim Eingeben und Entnehmen optimal gestaltet ist.

Die Lösung der Aufgabe beschreibt der Patentanspruch 1. Weitere vorteilhafte Ausgestaltungen der gefundenen Anordnung gehen aus den abhängigen Ansprüchen hervor.

Als besonders vorteilhaft ist hervorzuheben, daß bei der erfindungsgemäßen Anordnung dadurch ein Minimum an Bauhöhe erzielt wird, daß die Datenkartenschächte in einer zu den Diagrammscheiben parallelen Ebene, und zwar noch innerhalb oder um ein geringes Maß außerhalb des durch die Höhe des den Diagrammscheiben zugeordneten Zentrier- und Mitnahmedorns bestimmten freien Raumes vorgesehen sind. Dabei bietet die gefundene Diagrammscheiben/Datenkarten-Komposition trotz hoher Packungsdichte eine gute Handhabbarkeit sowohl bezüglich der Diagrammscheiben als auch der Datenkarten, da letztere beim Öffnen des Gerätes in eine Eingabe/Entnahmeposition gebracht werden. Außerdem macht die räumlich enge gegenseitige Zuordnung von Diagrammscheiben und Datenkarten, mit anderen Worten das ortsnahe und nur bei geöffneter Schublade mögliche Eingeben und Entnehmen der beiden Aufzeichnungsträger die organisatorische Bindung und die Notwendigkeit bei einem Fahrerwechsel, bei Antritt einer Fahrt oder am Ende eines Arbeitstages beide Aufzeichnungsträger handhaben zu müssen, auf einfache Weise bewußt.

Vorteilhaft ist ferner, daß mittels der Schublade, die in geeigneter Weise verriegelt wird, die Schächte der Datenkarten von außen unzugänglich abdeckbar und verriegelbar sind. Das heißt, separate konstruktive Maßnahmen zur Verriegelung der Datenkarten und zum wenigstens staubdichten Abdecken der Schächte sind nicht erforderlich, so daß die Herstellkosten des erfingungsgemäßen Konzeptes trotz der Verwendung von zwei jeweils dem Fahrer und dem Beifahrer zugeordneten Aufzeichnungsträgern, im Vergleich beispielsweise mit einem Fahrtschreiber, bei dem die Diagrammscheiben, was zweifelsfrei eine erhebliche komfortablere Handhabung bietet, selbsttätig eingezogen werden und dementsprechend für die Datenkarten ein weitgehend autonomes Datenkartenaggregat vorgesehen werden muß, wesentlich geringer sind.

Erwähnenswert ist außerdem die Integration der Datenkartenschächte an der der Schublade zugewandten Seite der Montageplatine, das Zusammenwirken der Schublade mit den jeweils eine Schachtwand bildenden, den Datenkarten als Träger dienenden Schlitten sowie an der Montageplatine angeformten, der obenliegenden Diagrammscheibe zugeordneten Niederhaltern.

Im folgenden sei die Erfindung anhand der Zeichnungen näher erläutert. Es zeigen:
Fig. 1 eine Frontansicht eines die Erfindung beinhaltenden Fahrtschreibers,
Fig. 2 Teilschnitte des Fahrtschreibers gemäß Fig. 1 in mehreren Ebenen quer zur Hauptachse,
Fig. 3 eine Draufsicht auf den Fahrtschreiber gemäß Fig. 1 mit herausgezogener Schublade und in unterschiedlichen Ebenen parallel zur Hauptachse liegenden Freischnitten,
Fig. 4 eine teilweise aufgeschnittene Seitenansicht des Fahrtschreibers gemäß Fig. 1 mit herausgezogener Schublade,
Fig. 5 eine Perspektivdarstellung der Schublade.

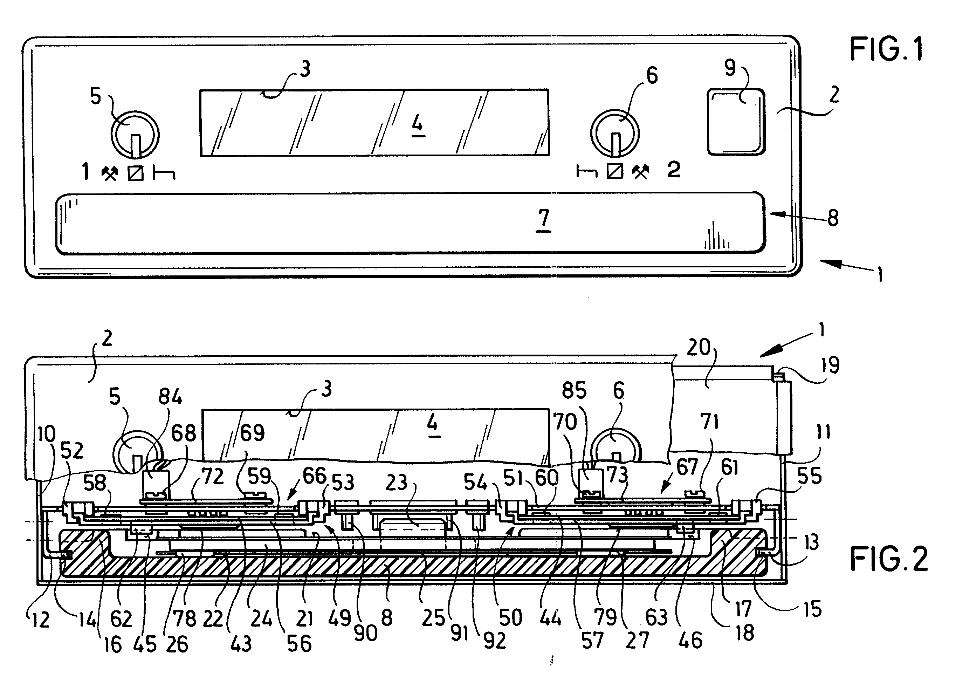

Die Frontansicht Fig. 1 zeigt eine an einem Fahrtschreiber 1 mit einem flachen Einbaugehäuse angebrachte Frontblende 2. Eine in der Frontblende 2 vorgesehene Aussparung 3 dient als Fenster für die Anzeigemittel des Fahrtschreibers 1, beispielsweise für eine LCD-Vorrichtung 4. Mit 5 und 6 sind Drehknöpfe bezeichnet, mittels denen in an sich üblicher Weise die Arbeitszeitdaten von Fahrer und Beifahrer einstellbar sind. Eine mit 7 bezeichnete Frontwand ist Teil einer Schublade 8, die in dem Gehäuse des Fahrtschreibers 1 verschiebbar geführt ist. Eine Taste 9 dient beispielsweise dazu, die Schublade 8 zu entriegeln und eine Verschiebung in eine griffgünstige Position auszulösen.

Aus der Fig. 2 ist ersichtlich, daß zur Führung der Schublade 8 an Seitenwänden 10, 11 des Gehäuses befestigte Schienen 12, 13 dienen, denen schubladenseitig Nute 14, 15 zugeordnet sind. Letztere sind in die Schublade 8 verstärkenden Holmen 16, 17 ausgebildet. Der Vollständigkeit halber sei an dieser Stelle erwähnt, daß die Seitenwände 10 und 11 die Schenkel eines U-förmigen Rahmens darstellen und das Gehäuse durch ein Bodenblech 18, ein Deckelblech 19 und eine frontseitige Wanne 20 vervollständigt wird.

Aus der Fig. 2 ist ferner ersichtlich, daß die in dem Fahrtschreiber 1 verwendeten visuell lesbaren Aufzeichnungsträger, das heißt die für Fahrer und Beifahrer erforderlichen Diagrammscheiben 21 und 22 in einer flachen Vertiefung der Schublade 8 angeordnet sind und lediglich der den Diagrammscheiben 21 und 22 in an sich üblicher Weise zugeordnetene Zentrier- und Mitnahmedorn 23 die durch die Holmen 16 und 17 vorgegebene Bauhöhe der Schublade 8 um ein geringes Maß überragt. Eine in der Schublade 8 schwenkbar gelagerte Distanzplatte 24 dient der obenliegenden dem Fahrer zugeordneten Diagrammscheibe 21 wenigstens was das Streckenregistrierorgan und das dem Fahrer zugeordneten Arbeitszeitregistrierorgan anbelangt als Registrierunterlage und als Träger für ein Registrierorgan, mittels dessen die Arbeitszeiten des Beifahrers auf der untenliegenden Diagrammscheibe 22, die auf einem mit dem Zentrier- und Mitnahmedorn 23 ein Teil bildenden Flansch 25 aufliegt, aufgezeichnet werden. Da die Registrierorgane und deren Antriebe nicht erfindungswesentlich sind, wurde auf ihre zeichnerische Darstellung der Übersichtlichkeit halber verzichtet. Mit 26 und 27 sind Podeste bezeichnet, die der Distanzplatte 24 als Auflage dienen.

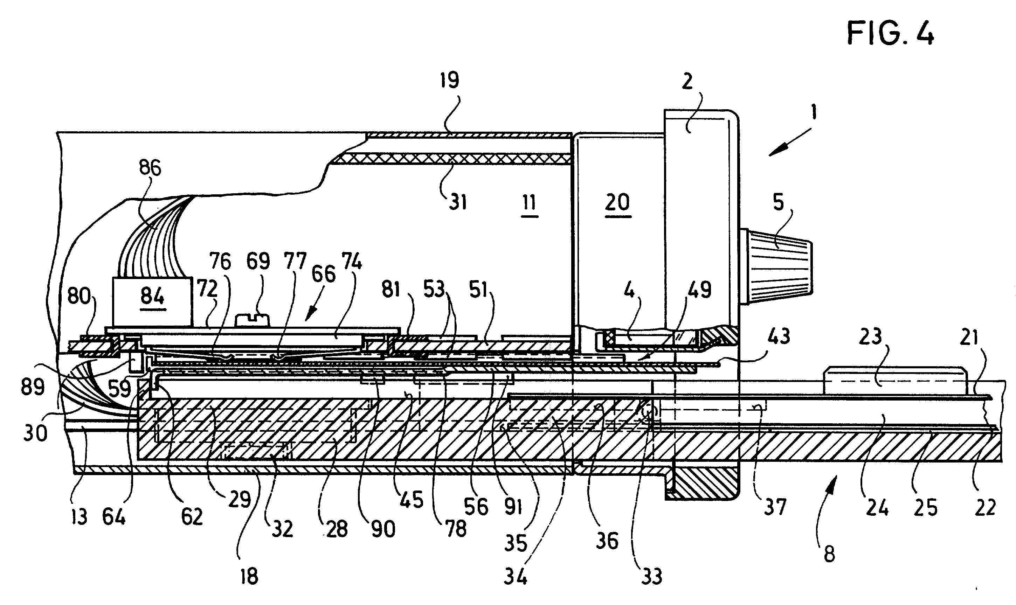

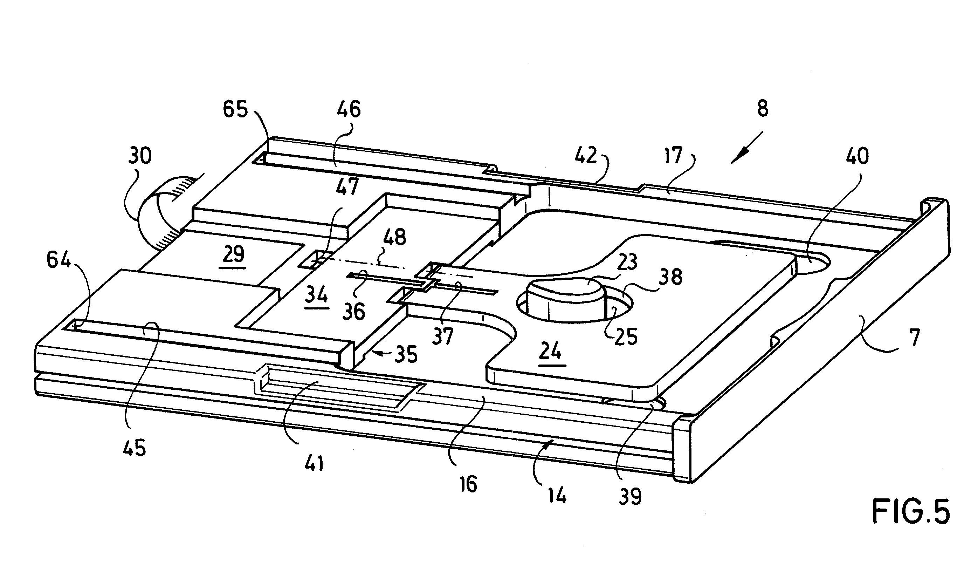

Der Antrieb des Zentrier- und Mitnahmedorns 23, dessen Achse in dem nicht näher bezeichneten Boden der Schublade 8 befestigt ist, erfolgt ausgehend von einem in die Schublade 8 eingesetzten Motor 28 über ein nicht dargestelltes, im Boden der Schublade 8 integriertes Räderwerk. Mit 29 ist eine dem Motor 28 zugeordnete Leiterplatte bezeichnet, welche über ein flexibles vorzugsweise Bandkabel 30 mit einer als Träger der elektronischen Baugruppen des Fahrtschreibers dienenden Leiterplatte 31 (Fig. 4) elektrisch verbunden ist, während 32 ein auf der Welle des Motors 28 befestigtes Ritzel darstellt. Aus der Fig. 4 ist ferner noch zu entnehmen, daß die Distanzplatte 24 auf einer Achse 33, die in einer in der Schublade 8 einsetzbaren Brücke 34 befestigt ist, gelagert ist. Die Brücke 34 bildet, was am besten aus der Fig. 5 ersichtlich ist, mittels einer geeigneten Aussparung in bezug auf den Boden der Schublade 8 einen Spalt 35, in welchen die untenliegende Diagrammscheibe 22 eingreift. Ferner stellt die Brücke 34 die Registrierunterlage für die obenliegende Diagrammscheibe 21 dar. Mit 36 und 37 sind in der Brücke 34 und in der Distanzplatte 24 ausgebildete Vertiefungen bezeichnet, die in üblicher Weise den nicht dargestellten auf der obenliegenden Diagrammscheibe 21 registrierenden Schreibstiften des Fahrtschreibers 1 zugeordnet sind und in diesem Falle deren in bezug auf die Diagrammscheibe 21 radialen Bewegungsbereich markieren. Der Vollständigkeit halber sei noch erwähnt, daß der Durchmesser einer in der Distanzplatte 24 ausgebildeten Öffnung 38 derart gewählt werden muß, daß eine freie Drehbewegung des exzentrisch ausgebildeten Zentrier- und Mitnahmedorns sowie ein ungehindertes Verschwenken der Distanzplatte 24 in jeder Stellung des Zentrier- und Mitnahmedorns gewährleistet ist.

Um ein Anheben der Distanzplatte 24 und das Entnehmen insbesondere der untenliegenden Diagrammscheibe 22 zu erleichtern, sind im Boden der Schublade 8 Griffmulden 39 und 40 vorgesehen. Seitlich an der Schublade 8 ausgebildete Aussparungen 41 und 42 dienen ebenfalls als Griffmulden, und zwar für ein ungehindertes seitliches Greifen der Fahrer und Beifahrer zugeordneten Datenkarten 43 und 44. Ferner zeigt die Fig. 5 Nute 45 und 46, in die im folgenden noch näher zu erläuternde Mitnehmer eingreifen, sowie einen Durchbruch 47. Über letzteren ist ein in der Brücke 34 gelagertes durch die strichpunktierte Linie 48 angedeutetes Koppelglied getrieblich mit dem bereits erwähnten in der Distanzplatte 24 angeordneten Registrierorgan in Wirkverbindung steht, antreibbar. Die den Datenkarten 43 und 44 zugeordneten Schächte 49 und 50 sind, wie insbesondere aus den Fig. 2 und 4 ersichtlich ist, unmittelbar an einer Montageplatine 51 ausgebildet. Dabei stellen jeweils mehrere in Reihen angeordnete und in Outsert-Spritzgußtechnik angeformte Führungselemente, von denen pro Schacht jeweils zwei mit 52 und 53 beziehungsweise 54 und 55 bezeichnet sind, einerseits eine Begrenzung der Schachthöhe andererseits eine Führung für jeweils einen eine Schachtwand bildenden Schlitten 56 und 57 dar. An den den Datenkarten 43, 44 als Auflage beziehungsweise Träger dienenden Schlitten 56 und 57 angeformte Lappen 58, 59 und 60, 61 wirken in Einsteckrichtung der Datenkarten 43, 44 als Anschläge, während weitere an den Schlitten 56 und 57 angeformte Lappen als Mitnehmer 62 und 63 dienen. Diese Mitnehmer 62, 63 greifen in die in der Schublade 8 ausgebildeten Nute 45 und 46 ein und wirken beim Herausziehen der Schublade 8 mit die Nute 45 und 46 begrenzenden Wandelementen 64 und 65 (Fig. 5) zusammen.

Den Schächten 49 und 50 ist jeweils eine Kontaktanordnung 66 bzw. 67 zugeordnet, die beispielsweise mittels Schrauben 68, 69 beziehungsweise 70, 71 an der Montageplatine 51 befestigt sind. Im einzelnen besteht jede Kontaktanordnung 66 beziehungsweise 67 aus einer Leiterplatte 72 beziehungsweise 73 und einem mit der Leiterplatte 72 beziehungsweise 73 verbundenen Rahmen 74 und 75, in welchem ein Kontaktsatz bestehend aus beispielsweise acht Kontaktfedern gehaltert ist. In Fig. 4 sind zwei Kontaktfedern mit 76 und 77 bezeichnet. In den Schlitten 56 und 57 ausgebildete Sicken 78 und 79 dienen der Vermeidung von Kurzschlüssen bei nicht eingelegten Datenkarten 43 und 44. Mit an der Montageplatine 51 angeformten Auflagen für die Kontaktanordnungen 66, 67, welche mit 80, 81 und 82, 83 bezeichnet sind, läßt sich spritzgußtechnisch eine Höheneinstellung und somit eine Einstellung der Kontaktkraft vornehmen. Mit 84 und 85 ist jeweils ein Stecker bezeichnet, der den zwischen der Leiterplatte 31 und den Kontaktanordnungen 66, 67 vorgesehenen Leitungsbündeln 86 und 87 als Kupplungselement dient.

An der Montageplatine 51 angeformte Anschläge 88 und 89 sind als Überhubbegrenzung für die Schlitten 56 und 57 vorgesehen. Außerdem sind an der Montageplatine 51 Finger 90, 91 und 92 ausgebildet, die in der geschlossenen Stellung der Schublade 8 den Zentrier- und Mitnahmedorn halbkreisförmig umgreifen und in bezug auf die obenliegende Diagrammscheibe 21 als Niederhalter dienen.

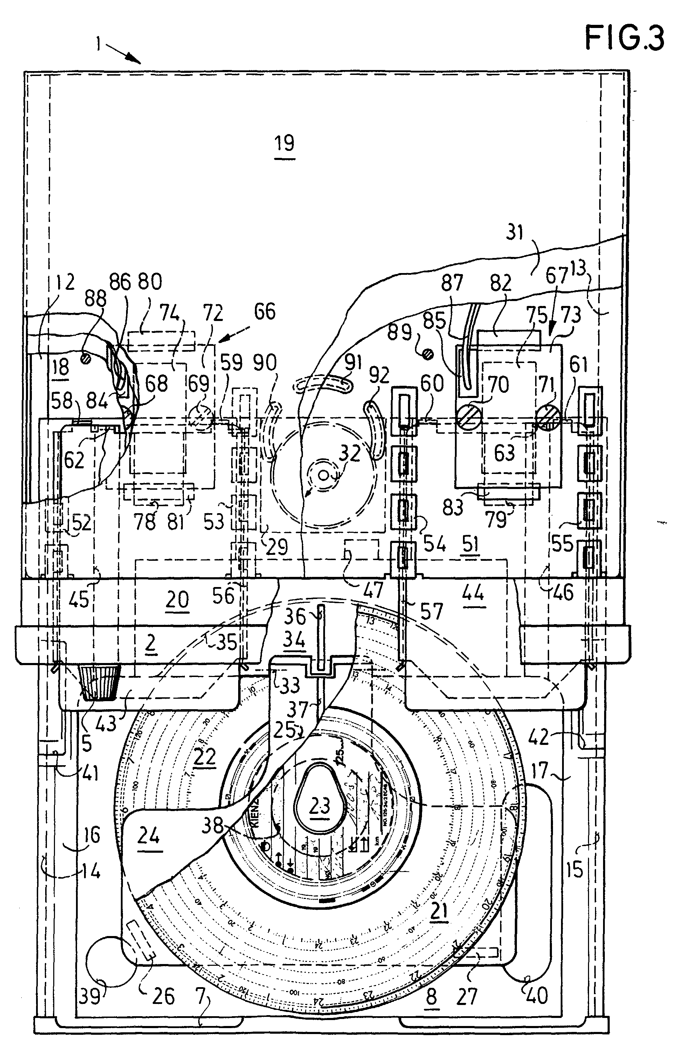

Bei der mit der Fig. 3 gezeigten Stellung der Schublade 8 befinden sich die Diagrammscheiben 21 und 22 in ihrer Einlege- beziehungsweise Entnahmeposition. Gleichzeitig sind aber auch die die Datenkarten 43 und 44 tragenden Schlitten 56 und 57 soweit aus dem Fahrtschreiber 1 herausbewegt worden, daß ein vor allem auch seitliches Greifen der Datenkarten 43 und 44 vor der feststehenden Frontwand des Fahrtschreibers 1 ohne weiteres möglich ist. Beim Transport der Schlitten 56 und 57 in die Einlege- und Entnahmeposition der Datenkarten 43 und 44 wirken die in die Nute 45 und 46 eingreifenden Mitnehmer 62 und 63 mit den die Nute 45 und 46 abschließenden Wandelementen 64 und 65 zusammen. Auf der anderen Seite, das heißt beim Transport der Schlitten 56 und 57 in die Lese- und Registrierposition wirkt die Innenseite der Frontseite 7 der Schublade 8 mit den Stirnflächen der Datenkarten 43 und 44 zusammen. Außerdem sei noch hervorgehoben, daß die T-förmige oder auch pilzförmig ausgebildete Distanzplatte 24 bei geöffneter Schublade 8 zwischen den Datenkarten 43 und 44 verschwenkt werden kann, und zwar in eine zur Frontfläche des Fahrtschreiber 1 parallele Lage. Dadurch wird die Handhabung der Datenkarten 43 und 44 bezüglich deren Zugriffsmöglichkeit weiter verbessert.

Die Integration der Datenkartenschächte 49 und 50 und der diesen zugeordneten Kontaktanordnungen 66 und 67 unmittelbar an der Montageplatine 51 stellt eine optimale Bauraumnutzung dar und vermeidet eine Belegung der ohnehin dicht bestückten Leiterplatte 31 mit für den unmittelbaren Lese- und Schreibbetrieb der Datenkarten 43 und 44 erforderlichen elektronischen Bauelementen.

Der Vollständigkeit halber sei noch erwähnt, daß die Freigabe der im wesentlichen bündig mit der Frontfläche des Fahrtschreibers 1 abschließenden Schublade 8 mittels der Taste 9 oder mittels eines Schlosses erfolgen kann, wobei nach einer gewissen Verzögerungszeit, die für die Übertragung von Daten auf die Datenkarten 43 und 44 erforderlich ist, die Schublade 8 um ein gewisses Maß, das für ein Greifen der Schublade 8 ausreichend ist, selbsttätig aus dem Fahrtschreiber 1 herausgefahren wird.

## Patentansprüche

1. Fahrtschreiber mit einem flachen Einbaugehäuse, in welchem mindestens eine Diagrammscheibe (21,22) und zwei Datenkarten (43,44) Anwendung finden, wobei
der der mindestens einen Diagrammscheibe (21, 22) zugeordnete Träger als Schublade (8) ausgebildet ist, und
für eine gleichachsige Aufnahme und verdrehfeste Mitnahme der mindestens einen Diagrammscheibe (21, 22) ein von einem Laufwerk uhrzeitrichtig angetriebener in der Schublade (8) gelagerter Zentrier- und Mitnahmedorn (23) vorgesehen ist, dadurch gekennzeichnet daß für eine Anordnung von zwei Diagrammscheiben (21, 22) in parallelen Ebenen eine in der Schublade (8) schwenkbar gelagerte Distanzplatte (24) vorgesehen ist,
daß der Halterung der Datenkarten (43, 44) dienende Schächte (49, 50) in einer zu den Diagrammscheiben (21, 22) parallelen Ebene an einer im Gehäuse des Fahrtschreibers befestigten Montageplatine ausgebildet sind und
daß die Schächte (49, 50) mittels der Schublade (8) abdeckbar sind und Mittel vorgesehen sind derart, daß in die Schächte (49, 50) eingegebene Datenkarten (43, 44) mittels der Schublade (8) in eine Lese-/Schreibposition bzw. in eine Eingabe-/Entnahmeposition bewegbar sind.

2. Fahrtschreiber nach Anspruch 1,
dadurch gekannzeichnet,
daß die Schächte (49, 50) mittels an der Montageplatine verschiebbar gelagerten Schlitten (56, 57) gebildet sind.

3. Fahrtschreiber nach Anspruch 1,
dadurch gekennzeichnet,
daß die Schächte (49, 50) zwischen der Montageplatine (51) und der Ebene der obenliegenden Diagrammscheibe (21) angeordnet sind.

4. Fahrtschreiber nach Anspruch 3,
dadurch gekennzeichnet,
daß der Abstand zwischen der Montageplatine (51) und der Ebene der obenliegenden Diagrammscheibe (21) durch die Höhe des zentrier- und Mitnahmedorns (23) bestimmt ist.

5. Fahrschreiber nach Anspruch 1,
dadurch gekennzeichnet,
daß die Distanzplatte (24) im wesentlichen T-förmig ausgebildet und derart gelagert ist, daß sie bei geöffneter Schublade (8) zwischen den Datenkarten (43, 44) verschwenkbar ist.

6. Fahrtschreiber nach Anspruch 2,
dadurch gekennzeichnet,
daß für eine von der Schublade (8) unabhängige Bewegung der Datenkarten (43, 44) den Schlitten (56, 57) jeweils ein bistabiles Rastgetriebe zugeordnet ist.

## Claims

1. Tachograph having a slim-line installation housing, in which at least one tachograph chart (21, 22) and two data cards (43, 44) are used, the carrier assigned to the at least one tachograph chart (21, 22) being constructed as a tray (8), and a centring and driving arbor (23) driven with the correct time by a clockwork and mounted in the tray (8) being provided for coaxial reception and rotationally fixed driving of the at least one tachograph chart (21, 22), characterised in that for an arrangement of two tachograph charts (21, 22) in parallel planes a spacer plate (24) pivotably mounted in the tray (8) is provided, in that shafts (49, 50) serving to hold the data cards (43, 44) are formed in a plane parallel to the tachograph charts (21, 22) on a mounting plate fixed in the tachograph housing and in that the shafts (49, 50) are coverable by means of the tray (8) and means are provided such that data cards (43, 44) put into the shafts (49, 50) are movable by means of the tray (8) into a reading/writing position or into a putting-in/taking-out position.

2. Tachograph according to Claim 1, characterised in that the shafts (49, 50) are formed by means of slides (56, 57) displaceably mounted on the mounting plate.

3. Tachograph according to Claim 1, characterised in that the shafts (49, 50) are arranged between the mounting plate (51) and the plane of the upper tachograph chart (21).

4. Tachograph according to Claim 3, characterised in that the distance between the mounting plate (51) and the plane of the upper tachograph chart (21) is determined by the height of the centring and driving arbor (23).

5. Tachograph according to Claim 1, characterised in that the spacer plate (24) is of substantially T-shaped configuration and is mounted in such a way that it is pivotable, when the tray (8) is open, between the data cards (43, 44).

6. Tachograph according to Claim 2, characterised in that for a movement of the data cards (43, 44) independent of the tray (8) the slides (56, 57) are each assigned a bistable stop-motion linkage.

## Revendications

1. Enregistreur de route avec un boîtier encastrable plat, dans lequel sont utilisés au moins un disque de diagramme (21, 22) et deux cartes de données (43, 44), le support associé audit au moins un disque de diagramme (21, 22) étant réalisé sous forme de tiroir (8) et
une broche de centrage et d'entraînement (23) montée dans ledit tiroir (8) et entraînée en fonction du temps réel par un mécanisme d'entraînement étant prévue pour un logement iso-axique et protégé contre le déplacement radial dudit au moins un disque de diagramme (21, 22), caractérisé par le fait
que, pour un arrangement de deux disques de diagramme (21, 22) dans des plans parallèles, il est prévu une plaque d'écartement (24) montée à pivotement dans ledit tiroir (8),
que des puits (49, 50) servant à la fixation des cartes de données (43, 44) sont formés dans un plan parallèle auxdits disques de diagramme (21, 22) sur une platine de montage fixée dans le boîtier de l'enregistreur de route et
que lesdits puits (49, 50) peuvent être recouverts au moyen dudit tiroir (8) et
qu'il est prévu des moyens, de telle sorte que des cartes de données (43, 44) introduites dans les puits (49, 50) peuvent être transportées, au moyen dudit tiroir (8), dans une position de lecture/écriture ou dans une position d'introduction/prélèvement.

2. Enregistreur de route selon la revendication 1,
caractérisé par le fait
que les puits (49, 50) sont formés au moyen de chariots (56, 57) montés mobiles sur ladite platine de montage (51).

3. Enregistreur de route selon la revendication 1,
caractérisé par le fait
que lesdits puits (49, 50) sont disposés entre ladite platine de montage (51) et le plan du disque de diagramme (21) situé en haut.

4. Enregistreur de route selon la revendication 3,
caractérisé par le fait
que la distance entre ladite platine de montage (51) et le plan dudit disque de diagramme (21) situé en haut est déterminée par la hauteur de ladite broche de centrage et d'entraînement (23).

5. Enregistreur de route selon la revendication 1,
caractérisé par le fait
que la plaque d'écartement (24) est réalisée, pour l'essentiel, en forme de T et montée de telle sorte que, avec le tiroir (8) ouvert, elle puisse être pivotée entre les cartes de données (43, 44).

6. Enregistreur de route selon la revendication 2,
caractérisé par le fait
que, pour un mouvement indépendant du tiroir (8) des cartes de données (43, 44), il a été associé aux chariots (56, 57) respectivement un mécanisme à arrêts instantanés bistable.
